# EUROPEAN PATENT APPLICATION

(11) **EP 4 529 370 A1**
(43) Date of publication of application: **26.03.2025**
(21) Application number: 23812176.8
(22) Date of filing: 25.05.2023
(51) Int. Cl.: H05K 5/02, H05K 5/00, H01Q 1/24, H05K 5/03

(54) **ELECTRONIC DEVICE AND ELECTRONIC DEVICE HOUSING STRUCTURE**

(30) Priority: 25.05.2022 KR 20220064065; 04.08.2022 KR 20220097531
(71) Applicant: Samsung Electronics Co., Ltd., Suwon-si, Gyeonggi-do 16677 (KR)
(72) Inventor: LIM, Jiwoon, Suwon-si, Gyeonggi-do 16677 (KR); KIM, Hakju, Suwon-si, Gyeonggi-do 16677 (KR); CHOI, Jongmun, Suwon-si, Gyeonggi-do 16677 (KR); CHOI, Hyunsuk, Suwon-si, Gyeonggi-do 16677 (KR)
(74) Representative: HGF
(86) International application number: PCT/KR2023/007200
(87) International publication number: WO 2023/229402

(57) **Abstract**

According to one embodiment of the present disclosure, provided is an electronic device comprising: a housing comprising a front plate, a rear plate facing the opposite direction to the front plate, and a side member surrounding the space between the front plate and the rear plate; and an antenna, wherein at least a portion of the housing comprises a mirror ink pattern layer containing metal powder, and adjacent pattern components forming the mirror ink pattern layer are insulated from each other. Various other embodiments may also be applicable.

## Description

### [Technical Field]

Various embodiments of the disclosure relate to an electronic device including a high-luminance, high-reflection mirror ink pattern layer and an electronic device housing structure.

### [Background Art]

Advancing information communication technology and semiconductor technology accelerate the spread and use of various electronic devices. In particular, recent electronic devices are being developed to carry out communication while carried on. Further, electronic devices may output stored information as voices or images. As electronic devices are highly integrated, and high-speed or high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling and e-wallet function. These electronic devices have been downsized to be conveniently carried by users.

There is an ongoing research effort to provide a better aesthetic look to an electronic device while protecting various circuit devices in the electronic device by produce the housing of the electronic device using metal.

Metal is used as an exterior material of the electronic device. For example, a metal texture may be implemented on the exterior material of the electronic device by depositing a metal, such as indium, on the rear cover of a smartphone. In a state in which the rear cover is formed of glass, an optical clear adhesive (OCA) is provided on one surface of a PET film, and a metal-texture decoration layer is formed on the other surface thereof using, e.g., an ultra violet (UV) molding pattern, indium deposition, and/or shield printing. The decoration layer is laminated on the inner surface of the glass, implementing a metal-texture glass.

As a method for surface treatment of a metal textured housing, the E-beam evaporation of a metal material (e.g., indium) has been conventionally used. However, this technique requires vacuum equipment which is expensive for manufacture and may suffer from a low yield due to a vacuum process disadvantageous in mass production. Further, including a vacuum process in a method for surface treatment in a metal textured housing may cause various cost increase issues. Accordingly, as an alternative to the E-beam deposition method, a method for implementing metal texture by mixing metal powder into ink and printing (hereinafter referred to as a 'mirror ink printing method') may be used.

The mirror ink printing method includes a method for printing ink mixed with conductive metal powder on the surface of a housing, and has the advantage of ease of mass production and reduced production costs compared to the E-beam deposition method. However, this method may use a high content of conductive metal pigment to implement a high luminance similarly to the metal textured housing implemented by the E-beam deposition method. However, use of a high content of conductive metal pigment may decrease the surface resistance of the printed layer formed by printing with the metal pigment, which increases the electrical conductivity, deteriorating the radiation performance of the antenna of the electronic device. If the content of the conductive metal pigment is decreased to avoid deterioration of the radiation performance, a desired degree of metal texturing is not exhibited on the surface of the housing.

### [Detailed Description of the Invention]

### [Technical Solution]

According to an aspect of the disclosure, there may be provided an electronic device comprising a housing including a front plate, a rear plate facing in an opposite direction from the front plate, and a side member surrounding a space between the front plate and the rear plate, and an antenna, wherein at least portion of the housing includes a mirror ink pattern layer containing a powder of a metal component, and wherein adjacent pattern elements forming a pattern of the mirror ink pattern layer are insulated from each other.

According to an aspect of the disclosure, there may be provided an accessory cover of an electronic device detachable from a housing of the electronic device, at least a portion of a cover of the electronic device comprising a mirror ink pattern layer containing a powder of a metal component and formed so that adjacent pattern elements forming a pattern of the mirror ink pattern layer are insulated from each other.

Other various embodiments are possible as well.

### [Brief Description of the Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to an embodiment;
FIG. 2 is a front perspective view illustrating an electronic device according to an embodiment;
FIG. 3 is a rear perspective view illustrating an electronic device according to an embodiment;
FIG. 4 is a view illustrating a cross section of a mirror ink pattern layer according to an embodiment;
FIG. 5 is a view illustrating a mirror ink pattern layer viewed from above according to an embodiment;
FIG. 6 is a graph illustrating the brightness of an electronic device housing to which a mirror ink pattern layer according to a comparative example is applied and the brightness of an electronic device housing to which a mirror ink pattern layer according to an embodiment of the disclosure is applied;
FIG. 7 is a graph illustrating the reflection rate of an electronic device housing to which a mirror ink pattern layer according to a comparative example is applied and the reflection rate of an electronic device housing to which a mirror ink pattern layer according to an embodiment of the disclosure is applied;
FIG. 8 is a view illustrating a cross section of a mirror ink pattern layer according to an embodiment;
FIG. 9 is a view illustrating a mirror ink pattern layer viewed from above according to an embodiment;
FIG. 10 is a view illustrating a cross section of a mirror ink pattern layer according to an embodiment;
FIG. 11 is a view illustrating a mirror ink pattern layer viewed from above according to an embodiment;
FIG. 12A is a view illustrating a cross section of an electronic device housing to which a mirror ink pattern layer is applied according to an embodiment;
FIG. 12B is a view illustrating the housing of FIG. 12A viewed from above according to an embodiment;
FIG. 12C is a view illustrating the housing of FIG. 12A viewed from above according to an embodiment;
FIG. 12D illustrates a measurement image of a product to which the housing of FIG. 12A is applied;
FIG. 13A is a view illustrating a cross section of an electronic device housing to which a mirror ink pattern layer is applied according to an embodiment;
FIG. 13B is a view illustrating the housing of FIG. 13A viewed from above according to an embodiment;
FIG. 13C is a view illustrating the housing of FIG. 13A viewed from above according to an embodiment; and
FIG. 13D illustrates a measurement image of a product to which the housing of FIG. 13A is applied.

Throughout the drawings, like reference numerals may be assigned to like parts, components, and/or structures.

### [Mode for Carrying out the Invention]

The following description taken in conjunction with the accompanying drawings may be presented to provide a comprehensive understanding of various implementations of the disclosure as defined by the claims and equivalents thereto. The specific embodiments disclosed in the following description entail various specific details to aid understanding, but are regarded as one of various embodiments. Accordingly, it will be apparent to those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe the various embodiments of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

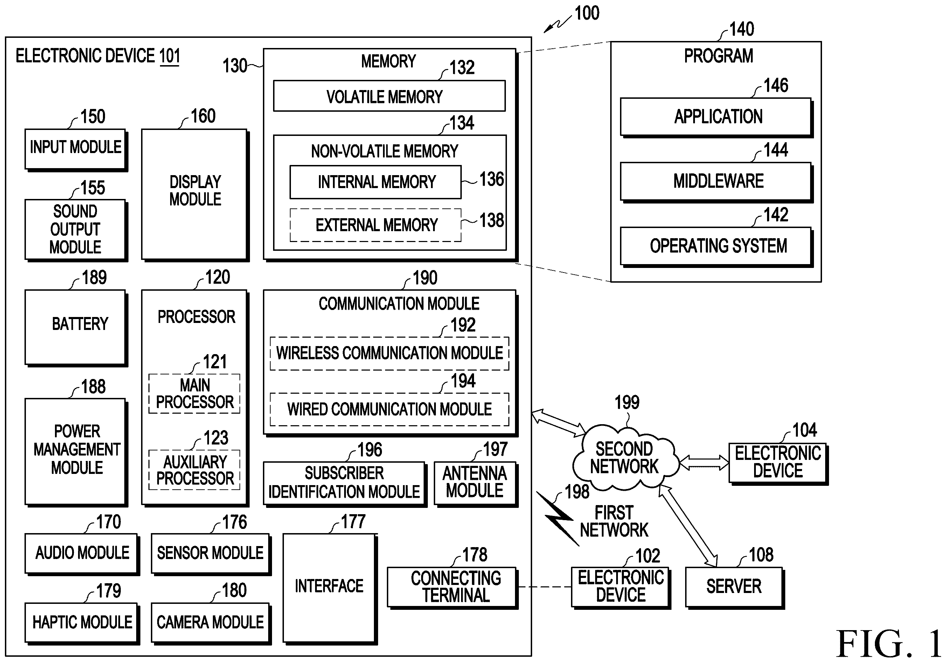

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

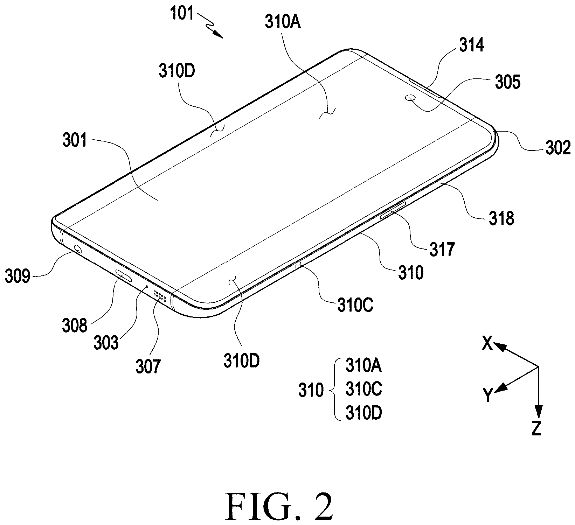

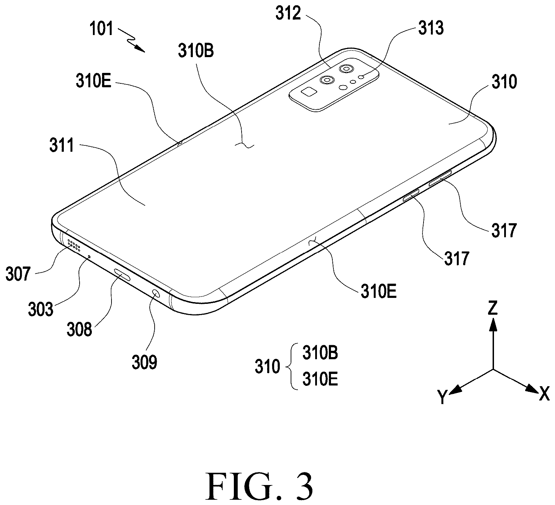

FIG. 2 is a front perspective view illustrating an electronic device 101 according to an embodiment. FIG. 3 is a rear perspective view illustrating an electronic device 101 according to an embodiment.

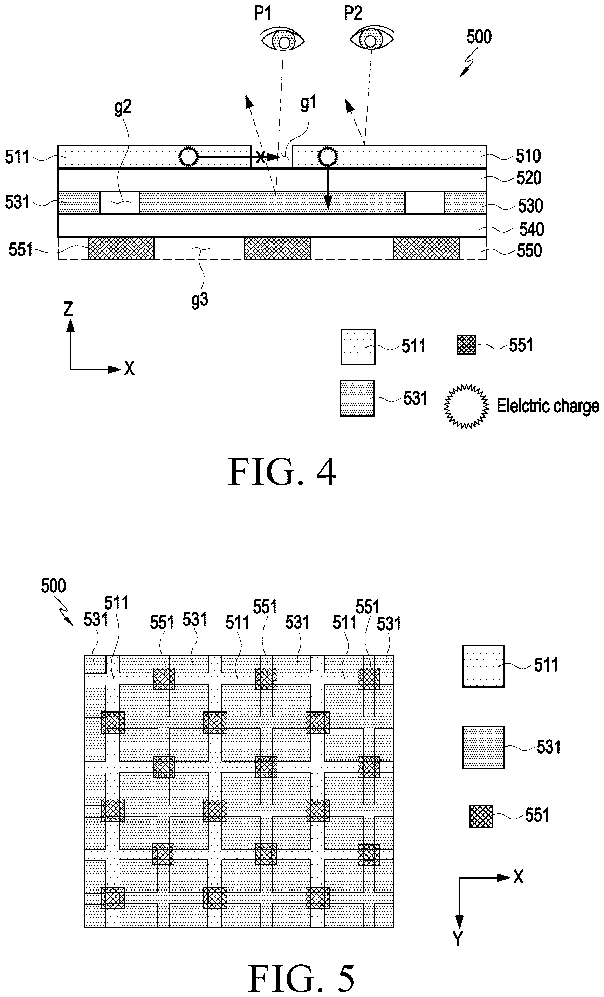

In the following detailed description, the vertical width direction of the electronic device 101 may be defined as the 'Y-axis direction', the horizontal width direction as the 'X-axis direction', and/or the height direction as the 'Z-axis direction'. In describing the direction, when 'negative/positive (-/+)' is not shown, it may be interpreted as including both the + direction and the - direction unless separately defined. In other words, the 'X-axis direction' may be interpreted as including both the +X direction and the -X direction, the 'Y-axis direction' may be interpreted as including both the +Y direction and the -Y direction, and the 'Z-axis direction' may be interpreted as including both the +Z direction and the -Z direction. In describing the direction, facing in any one of the three axes of the orthogonal coordinate system may include facing in a direction parallel to the axis. It should be noted that the arrangement of the components is defined with respect to the Cartesian coordinate system shown in the drawings in the description of the drawings, and the description of these directions or components do not limit various embodiments of the disclosure. For example, FIG. 4 described below illustrates a mirror ink pattern layer viewed from a side, and the first mirror ink layer 510, the first transparent insulation ink layer 520, the second mirror ink layer 530, the second transparent insulation ink layer 540, and the third ink layer 550 are sequentially stacked in the direction opposite to the Z axis which is the height direction of the electronic device 101. It should be noted that it is for aid in understanding a multi-layer pattern structure, the first mirror ink layer 510, the first transparent insulation ink layer 520, the second mirror ink layer 530, the second transparent insulation ink layer 540, and the third ink layer 550 are not necessarily stacked in the direction opposite to the height direction of the electronic device 101. Further, FIG. 5 described below is a view illustrating a mirror ink pattern layer viewed from above and may illustrate a mirror ink pattern layer viewed in the direction opposite to the Z axis which is the height direction of the electronic device 101. In the following description, the X axis may be denoted as a first direction, the Y axis as a second direction, and the Z axis as a third direction.

Referring to FIGS. 2 and 3, according to an embodiment, an electronic device 101 may include a housing 310 with a front surface 310A, a rear surface 310B, and a side surface 310C surrounding a space between the front surface 310A and the rear surface 310B. According to another embodiment (not shown), the housing 310 may denote a structure forming part of the front surface 310A, the rear surface 310B, and the side surface 310C of FIG. 2. According to an embodiment, at least part of the front surface 310A may have a substantially transparent front plate 302 (e.g., a glass plate or polymer plate including various coating layers). The rear surface 310B may be formed by a rear plate 311. The rear plate 311 may be formed of, e.g., glass, ceramic, polymer, metal (e.g., aluminum, stainless steel (STS), or magnesium), or a combination of at least two thereof. The side surface 310C may be formed by a side bezel structure (or a "side member") 318 that couples to the front plate 302 and the rear plate 311 and includes a metal and/or polymer. According to an embodiment, the rear plate 311 and the side bezel plate 318 may be integrally formed together and include the same material (e.g., glass, metal, such as aluminum, or ceramic).

In the embodiment illustrated, the front plate 302 may include two first edge areas 310D, which seamlessly and bendingly extend from the first surface 310A to the rear plate 311, on both the long edges of the front plate 302. In the embodiment (refer to FIG. 3) illustrated, the rear plate 311 may include two second edge areas 310E, which seamlessly and bendingly extend from the rear surface 310B to the front plate, on both the long edges. According to an embodiment, the front plate 302 (or the rear plate 311) may include only one of the first edge areas 310 (or the second edge areas 310E). Alternatively, the first edge areas 310D or the second edge areas 301E may partially be excluded. According to an embodiment, at side view of the electronic device 101, the side bezel structure 318 may have a first thickness (or width) for sides that do not have the first edge regions 310D or the second edge regions 310E and a second thickness, which is smaller than the first thickness, for sides that have the first edge regions 310D or the second edge regions 310E.

According to an embodiment, the electronic device 101 may include at least one of a display 301, audio modules 303, 307, and 314 (e.g., the audio module 170 of FIG. 1), a sensor module (e.g., the sensor module of FIG. 1). 176), camera modules 305, 312, and 313 (e.g., the camera module 180 of FIG. 1), a key input device 317 (e.g., the input module 150 of FIG. 1), and connector holes 308 and 309 (e.g., the connecting terminal 178 of FIG. 1). According to an embodiment, the electronic device 101 may exclude at least one (e.g., the connector hole 309) of the components or may add other components.

According to an embodiment, the display 301 may be visually revealed through, e.g., a majority portion of the front plate 302. According to an embodiment, at least a portion of the display 301 may be revealed through the front plate 302 forming the front surface 310A and the first edge regions 310D. According to an embodiment, the edge of the display 301 may be formed to be substantially the same in shape as an adjacent outer edge of the front plate 302. According to another embodiment (not shown), the interval between the outer edge of the display 301 and the outer edge of the front plate 302 may remain substantially even to give a larger area of exposure the display 301.

According to an embodiment, the surface (or the front plate 302) of the housing 310 may include a screen display area formed as the display 301 is visually exposed. For example, the screen display area may include the front surface 310A and first edge areas 310D.

According to an embodiment, a recess or opening may be formed in a portion of the screen display area (e.g., the front surface 310A or the first edge area 310D) of the display 301, and at least one or more of the audio module 314, sensor module (not shown), light emitting device (not shown), and camera module 305 may be aligned with the recess or opening. According to another embodiment (not shown), at least one or more of the audio module 314, sensor module (not shown), camera module 305, fingerprint sensor (not shown), and light emitting device (not shown) may be included on the rear surface of the screen display area of the display 301.

According to an embodiment (not shown), the display 301 may be disposed to be coupled with, or adjacent, a touch detecting circuit, a pressure sensor capable of measuring the strength (pressure) of touches, and/or a digitizer for detecting a magnetic field-type stylus pen.

According to an embodiment, at least part of the key input device 317 may be disposed in the first edge regions 310D and/or the second edge regions 310E.

According to an embodiment, the audio modules 303, 307, and 314 may include, e.g., a microphone hole 303 and speaker holes 307 and 314. A microphone for acquiring external sounds may be disposed in the microphone hole 303. **In** some embodiments, a plurality of microphones may be disposed to detect the direction of the sound. The speaker holes 307 and 314 may include an external speaker hole 307 and a phone receiver hole 314. **In** an embodiment, the speaker holes 307 and 314 and the microphone hole 303 may be implemented as a single hole, or speakers may be included without the speaker holes 307 and 314 (e.g., piezo speakers). The audio modules 303, 307, and 314 are not limited to the above-described structure. Depending on the structure of the electronic device 101, various design changes may be made-- e.g., only some of the audio modules may be mounted, or a new audio module may be added.

According to an embodiment, the sensor modules (not shown) may generate an electrical signal or data value corresponding to an internal operating state or external environmental state of the electronic device 101. The sensor modules (not shown) may include a first sensor module (not shown) (e.g., a proximity sensor) and/or a second sensor module (not shown) (e.g., a fingerprint sensor) disposed on the front surface 310A of the housing 310 and/or a third sensor module (not shown) (e.g., an HRM sensor) and/or a fourth sensor module (not shown) (e.g., a fingerprint sensor) disposed on the rear surface 310B of the housing 310. **In** an embodiment (not shown), the fingerprint sensor may be disposed on the rear surface 310B as well as on the front surface 310A (e.g., the display 301) of the housing 310. The electronic device 101 may further include sensor modules not shown, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor (not shown). The sensor module (not shown) is not limited to the above-described structure. Depending on the structure of the electronic device 101, various design changes may be made--e.g., only some of the sensor modules may be mounted, or a new sensor module may be added.

According to an embodiment, the camera modules 305, 312, and 313 may include a first camera module 305 disposed on the first surface 310A of the electronic device 101, and a rear camera device 312 and/or a flash 313 disposed on the rear surface 310B. The camera modules 305 and 312 may include one or more lenses, an image sensor, and/or an image signal processor. The flash 313 may include, e.g., a light emitting diode (LED) or a xenon lamp. According to an embodiment, two or more lenses (an infrared (IR) camera, a wide-angle lens, and a telescopic lens) and image sensors may be disposed on one surface of the electronic device 101. The camera modules 305, 312, and 313 are not limited to the above-described structure. Depending on the structure of the electronic device 101, various design changes may be made--e.g., only some of the camera modules may be mounted, or a new camera module may be added.

According to an embodiment, the electronic device 101 may include a plurality of camera modules (e.g., a dual camera or triple camera) having different attributes (e.g., angle of view) or functions. For example, a plurality of camera modules 305 and 312 including lenses having different angles of view may be configured, and the electronic device 101 may control to change the angle of view of the camera modules 305 and 312 performed by the electronic device 101 based on the user's selection. At least one of the plurality of camera modules 305 and 312 may form, for example, a wide-angle camera and at least another of the plurality of camera modules may form a telephoto camera. Similarly, at least one of the plurality of camera modules 305 and 312 may be a front camera and at least another of the plurality of camera modules may be a rear camera. Further, the plurality of camera modules 305 and 312 may include at least one of a wide-angle camera, a telephoto camera, and an infrared (IR) camera (e.g., a time of flight (TOF) camera, a structured light camera). According to an embodiment, the IR camera may be operated as at least a portion of the sensor module. For example, the TOF camera may be operated as at least a portion of a sensor module (not shown) for detecting the distance to the subject.

According to an embodiment, the key input device 317 may be disposed on the side surface 310C of the housing 310. According to an embodiment, the electronic device 101 may exclude all or some of the above-mentioned key input devices 317 and the excluded key input devices 317 may be implemented in other forms, e.g., as soft keys, on the display 301. According to an embodiment, the key input device may include the sensor module (not shown) disposed on the rear surface 310B of the housing 310.

According to an embodiment, the light emitting device may be disposed on, e.g., the front surface 310A of the housing 310. The light emitting device (not illustrated) may provide, e.g., information about the state of the electronic device 101 in the form of light. According to another embodiment, the light emitting device (not shown) may provide a light source that interacts with, e.g., the front camera module 305. The light emitting device (not illustrated) may include, e.g., a light emitting diode (LED), an infrared (IR) LED, and/or a xenon lamp.

According to an embodiment, the connector holes 308 and 309 may include, e.g., a first connector hole 308 for receiving a connector (e.g., a universal serial bus (USB) connector) for transmitting or receiving power and/or data to/from an external electronic device and/or a second connector hole (e.g., an earphone jack) 309 for receiving a connector for transmitting or receiving audio signals to/from the external electronic device. The connector holes 308 and 309 are not limited to the above-described structure. Depending on the structure of the electronic device 101, various design changes may be made, such as mounting only some of the connector holes or adding a new connector hole.

According to an embodiment, the camera module 305 and/or the sensor module (not shown) may be disposed to contact the external environment through a designated area of the display 301 and the front plate 302 from the internal space of the electronic device 101. For example, the designated area may be an area in which pixels are not disposed in the display 301. As another example, the designated area may be an area in which pixels are disposed in the display 301. When viewed from above the display 301, at least a portion of the designated area may overlap the camera module 305 and/or the sensor module. As another example, some sensor modules may be arranged to perform their functions without being visually exposed through the front plate 302 from the internal space of the electronic device.

The electronic device 101 disclosed in FIGS. 2 and 3 has a bar-type or plate-type appearance but the present invention is not limited thereto. For example, the illustrated electronic device may be part of a rollable electronic device or a foldable electronic device. "Rollable electronic device" may mean an electronic device at least a portion of which may be wound or rolled or received in the housing 310 as the display may be bent and deformed. As the display is stretched out or is exposed to the outside in a larger area according to the user's need, the rollable electronic device may use an expanded second display area. "Foldable electronic device" may mean an electronic device that may be folded in directions to face two different areas of the display or in directions opposite to each other. In general, in the portable state, the foldable electronic device may be folded so that the two different areas of the display face each other and, in an actual use state, the user may unfold the display so that the two different areas form a substantially flat shape. In some embodiments, the electronic device 101 according to an embodiment of the disclosure may be interpreted as including various electronic devices, such as a laptop computer or a home appliance, as well as a portable electronic device, such as a smart phone.

FIG. 4 is a view illustrating a cross section of a mirror ink pattern layer according to an embodiment. FIG. 5 is a view illustrating a mirror ink pattern layer viewed from above according to an embodiment.

Various embodiments of the disclosure disclose a mirror ink printing method replacing a conventional E-beam deposition method using a metal material (e.g., indium), as a method for allowing a housing 310 of an electronic device (e.g., the electronic device 101 of FIGS. 1 to 3) to have metal texture.

Here, the housing 310 to which the mirror ink printing method is applicable may correspond to, e.g., a rear plate (e.g., the rear plate 311 of FIG. 3). The rear plate may be formed of, e.g., glass, ceramic, polymer, metal (e.g., aluminum, stainless steel (STS), or magnesium), or a combination of at least two of the above materials. Further, the rear plate 311 may be formed by at least one of silicone, urethane, rubber, leather, fiber, or a combination of at least two thereof to protect the inside of the electronic device from an external impact or to prevent scratches occurring on the outer surface. However, as an example of the housing 310, it is not necessarily limited thereto. The housing 310 to which the mirror ink printing method is applicable may be the front plate 302, or may correspond to a side member portion between the front plate 302 and the rear plate 311. Further, the mirror ink printing method according to an embodiment of the disclosure may be applied not only to at least a portion of the housing 310 of the electronic device as described above, but also to an accessory cover detachable from the housing 310 of the electronic device.

According to an embodiment of the disclosure, the electronic device 101 to which the mirror ink printing method is applicable may be an electronic device including at least one antenna. Here, the at least one antenna may be an antenna provided for communication with the outside (e.g., an external electronic device (e.g., the electronic devices 103 and 104 of FIG. 1)), and may correspond to at least one of an antenna (e.g., a patch antenna) disposed in the inner space of the housing 310 or an antenna (e.g., a metal antenna) that utilizes at least a portion of the housing 310 as an antenna. In the mirror ink printing method according to an embodiment of the disclosure, even when the antenna is disposed inside the housing 310 and/or is provided using at least a portion of the housing 310 as described above, the antenna performance may not be degraded because it has a low impedance characteristic in expressing the metal texture thereof.

In the mirror ink printing method, the higher the luminance (hereinafter, referred to as a "high luminance" characteristic), and the higher the reflection rate to light (hereinafter, referred to as a "high reflection" characteristic), the more beautiful and colorful metal texture may be expressed. According to an embodiment, in order to realize high luminance and high reflection characteristics through the mirror ink printing method, a method of simply increasing the content of metal powder contained in the printed ink may be applied. However, as described above in the background art, as the content of the metal powder increases, the conducting performance of the printed layer increases, and thus the antenna performance may deteriorate.

In order to express the metal texture and prevent deterioration of the antenna performance, the mirror ink printing method according to an embodiment of the disclosure may include a mirror ink pattern layer containing a powder of a metal component. The mirror ink pattern layer may be formed by printing a mirror ink containing a powder (e.g., a metal pigment) of a metal component on an object (e.g., the housing 310) to a thickness of about 1 µm or more using a patterned plate.

According to an embodiment of the disclosure, the mirror ink pattern layer may include a lattice-shaped pattern. The lattice-shaped pattern may include a plurality of pattern elements formed on the same layer. The lattice-shaped pattern may be one formed so that the pattern elements are spaced apart from each other, and arranged, at regular intervals in one direction (e.g., the first direction (X direction) or the second direction (Y direction)), but is not necessarily limited thereto. For example, the lattice-shaped pattern may be one formed so that the pattern elements are spaced apart from each other at regular intervals along a fourth direction (e.g., a diagonal direction between the X direction and the Y direction) other than the first direction (the X direction) and the second direction (the Y direction). **In** this case, adjacent pattern elements forming the lattice-shaped pattern may be physically spaced apart from each other to be insulated from each other. However, in addition to the adjacent pattern elements forming the lattice-shaped pattern being physically spaced apart from each other, all metal powders are not coupled to one pattern element inside the pattern element, and thus a low impedance characteristic advantageous for radio wave communication may be implemented.

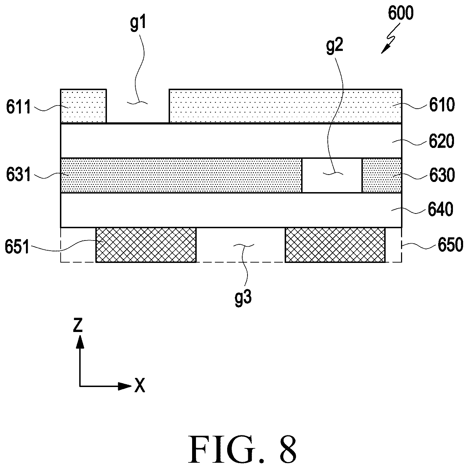

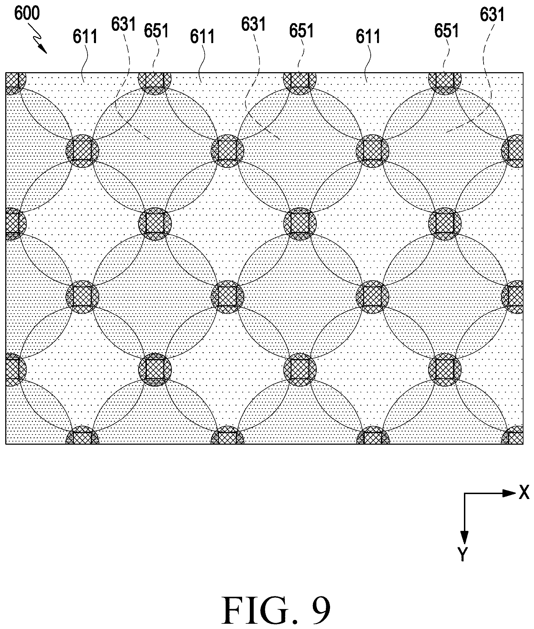

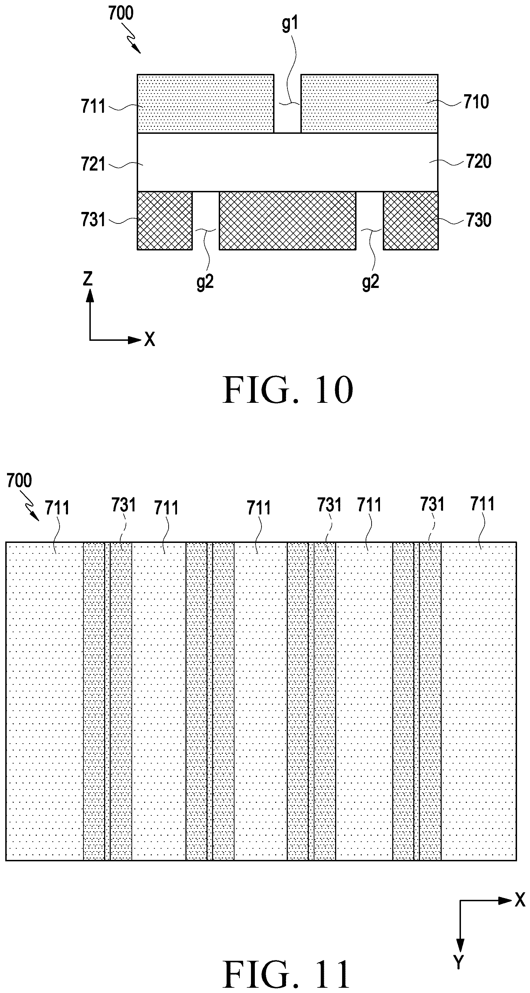

The mirror ink pattern layer may be formed as a multi-layer pattern structure. When the mirror ink pattern layer is formed as a multi-layer pattern structure, it may mean that at least two patterns that are the same or different from each other are positioned on different layers, and at least two patterns positioned on different layers at least partially overlap each other. **In** this case, in the pattern, each of the adjacent pattern elements forming the pattern may be formed as an arrangement of islands or lines. Here, that the pattern elements are formed as islands may mean that a plurality of pattern elements arranged on the same layer are arranged to be spaced apart from each other at regular intervals along the first direction and the second direction. **In** this case, the pattern elements may be formed as a dot, circle, semicircular, or polygonal shape. Further, that the pattern elements are formed as lines may mean that a plurality of pattern elements arranged on the same layer are arranged to be spaced apart from each other at regular intervals along the first direction or the second direction. For example, the embodiments of FIGS. 4 and 5, and the embodiments of FIGS. 8 and 9, which are described below, illustrate that each of adjacent pattern elements forming a pattern is formed as an island arrangement, and the embodiments of FIGS. 10 and 11 illustrate that each of adjacent pattern elements forming a pattern is formed as a line arrangement.

The shape of the pattern is not necessarily limited to the illustrated embodiment. According to an embodiment, the pattern may be formed by a combination of two or more pattern elements having the same or different shapes. For example, in the multi-layer pattern structure, among the pattern elements forming the pattern in different layers, pattern elements of any one layer may be formed as a circular shape, and pattern elements of another layer may be formed as a polygonal shape. Alternatively, in the multi-layer pattern structure, pattern elements forming the pattern in different layers may be formed as different arrangements, e.g., one layer of pattern elements may be formed as an island arrangement, and another layer of pattern elements may be formed as a line arrangement. Alternatively, in the multi-layer pattern structure, pattern elements forming patterns in some layer(s) may be formed as an island arrangement or a line arrangement, and other layers may have a structure in which patterns are omitted, such as insulation ink. Alternatively, in the multi-layer pattern structure, among the pattern elements forming the pattern existing in one layer, some pattern elements may be formed as a circular shape and other pattern elements may be formed as a polygonal shape. Other various embodiments may be applied.

The above-described embodiments illustrate that each of the pattern elements forming the pattern has a structured shape. However, the disclosure is not necessarily limited thereto, and according to an embodiment, each of the pattern elements in the pattern may have a semi-structured and/or unstructured shape.

According to an embodiment, when the pattern elements of the mirror ink pattern layer are formed as an island arrangement, the mirror ink pattern layer may be formed as the multi-layer pattern structure of at least three layers. According to an embodiment, the number of layers may correspond to the number of mirror ink layers. When the mirror ink pattern layer is formed as an island arrangement, the mirror ink pattern layer should be formed as the multi-layer pattern structure of at least three layers in order to realize an effect in which the entire mirror ink pattern layer is printed when the mirror ink pattern layer is viewed from above.

For example, as illustrated in FIG. 4, when a pattern is formed of pattern elements of an island arrangement, a multi-layer pattern structure 500 of at least three layers may be applied. In this case, the multi-layer pattern structure 500 may include a first mirror ink layer 510 containing a powder of a metal component, a second mirror ink layer 530 containing a powder of a metal component, and a third mirror ink layer 550 containing a powder of a metal component. Here, the powders (e.g., metal flakes, pastes, powders) of metal components included in the first mirror ink layer 510, the second mirror ink layer 530, and the third mirror ink layer 550 may be powders of metal components in which types or contents are set to be the same, but are not necessarily limited thereto, and it should be noted that powders of metal components of different types or contents may be used. The first mirror ink layer 510, the second mirror ink layer 530, and the third mirror ink layer 550 may not be directly stacked on each other, but may be indirectly stacked through an insulation layer. For example, in the multi-layer pattern structure of the three layers, as illustrated in FIG. 4, the first mirror ink layer 510, the first transparent insulation ink layer 520, the second mirror ink layer 530 containing a powder of a metal component, the second transparent insulation ink layer 540, and the third mirror ink layer 550 containing a powder of a metal component may be sequentially stacked. The first transparent insulation ink layer 520 and the second transparent insulation ink layer 540 are insulation layers having a high resistance value (e.g., 1 GQ or more) and may restrict electrical flow in a space between the mirror ink layers 510, 530, and 550.

Referring to FIGS. 4 and 5 together, the first mirror ink layer 510 may include a plurality of first pattern elements 511 spaced apart from each other through a first gap g1. The second mirror ink layer 530 may include a plurality of second pattern elements 531 spaced apart from each other through a second gap g2 and formed at different positions from the plurality of first patterns 511. Further, the third mirror ink layer 550 may include a plurality of third pattern elements 551 spaced apart from each other through a third gap g3 and formed at different positions from the plurality of first pattern elements 511 and the plurality of second pattern elements 531. Here, it should be noted that the plurality of first pattern elements 511, the plurality of second pattern elements 531, and the plurality of third pattern elements 551 may be patterns having the same size or shape but, without limitations thereto, may be patterns having different sizes and/or shapes.

For example, referring to FIG. 5, although the size of the plurality of first pattern elements 511 and the size of the plurality of second pattern elements 531 are similar, the size of the plurality of third pattern elements 551 may be relatively small compared to the size of the plurality of first pattern elements 511 and the size of the plurality of second pattern elements 531. However, it should be noted that the disclosure is not necessarily limited thereto, and other various embodiments may be applied.

As another example, referring to FIGS. 4 and 5 together, the plurality of second pattern elements 531 may be positioned between the plurality of first pattern elements 511 when the multi-layer pattern structure is viewed from above (e.g., when viewed in a direction opposite to the Z-axis), and the plurality of third pattern elements 551 may be positioned between the plurality of first pattern elements 511 and between the plurality of second pattern elements 531 when the multi-layer pattern structure is viewed from above (e.g., when viewed in a direction opposite to the Z-axis). **In** this case, the plurality of second pattern elements 531 may at least partially overlap the plurality of first pattern elements 511, and the third pattern elements 551 may at least partially overlap the plurality of first pattern elements 511 and the plurality of second pattern elements 531.

According to an embodiment of the disclosure, it is possible to provide various advantages by forming a multi-layer pattern structure of at least three layers each containing a powder of a metal component. As illustrated in FIG. 4, as the powder of the metal component is applied to the multi-layer pattern structure, the path through which the user's gaze reaches may be different depending on the position (e.g., P1 and P2), and thus a deeper and more colorful exterior design may be possible. Further, the disclosure may include a pattern in which mirror ink layers forming the multi-layer pattern structure are spaced apart from each other and have a conductive islands structure (or a floating structure). For example, since the movement of electric charges is blocked and insulated in all directions around the top, bottom, left, and right with respect to a certain pattern (e.g., the plurality of first patterns 511), the mirror ink layers have non-conductive characteristics, and thus the antenna performance deterioration is prevented regardless of the content of the metal powder. Since there is no concern about deterioration of antenna performance, the content of metal powder may be increased without limitation, and thus a housing having a high-luminance, high-reflection metal texture may be implemented.

Table 1 below shows the resistance value and the resultant conductivity of the mirror ink pattern layer according to an embodiment of the disclosure, in which the lattice-shaped pattern is formed as a multi-layer pattern structure and a printed layer according to the mirror ink printing method conventionally and typically used using an ohm meter. Table 1 may show the result of testing the electrical resistance and conductivity measurement after mixing an aluminum (Al) powder with a mirror ink and printing the same. As a comparison group, an experiment on low-Al content (less than 5%) mirror ink printing and high-Al content (less than 20%) mirror ink printing is also performed. The low-Al content (less than 5%) mirror ink printing and high-Al content (less than 20%) mirror ink printing each may be continuous printing of mirror ink rather than lattice-shaped patterns.

**[Table 1]**

| Conductivity measurement results | | | Remarks |
|---|---|---|---|
| Items | Resistance value | Conductivity | Luminance & reflection rate |
| Low Al content (less than 5%) mirror ink printing (continuous printing) | Infinite (11GΩ or more) | Non-conductivity | Low |
| High Al content (20% or more) mirror ink printing (continuous printing) | 0 Ω | Conductivity | High |
| High Al content (20% or more) mirror ink printing (the multi-layer pattern structure of the disclosure applied) | Infinite (11GΩ or more) | Non-conductivity | High |

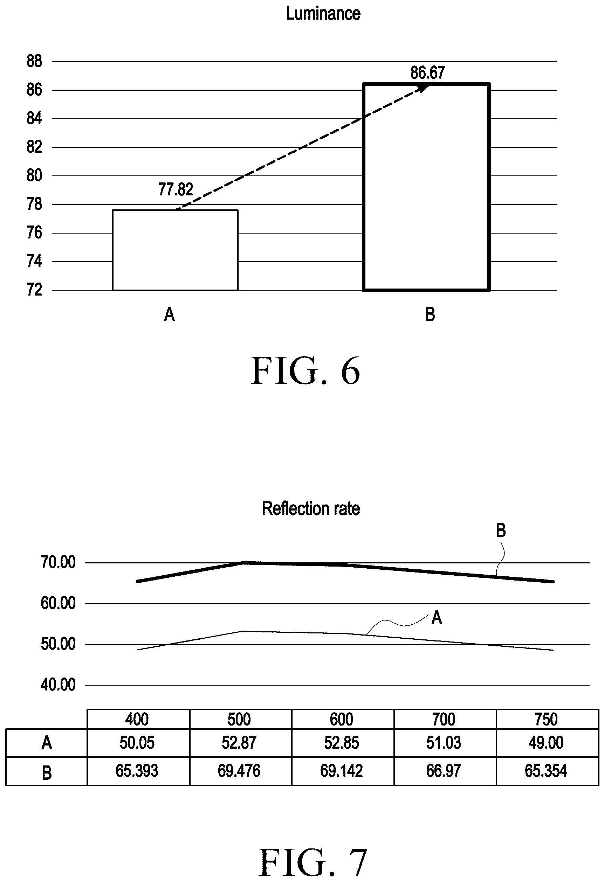

As may be identified from Table 1 above, according to an embodiment of the disclosure, it may be identified that a high content of metal powder is included to provide high luminance and high reflection rate characteristics, and non-conductive characteristics are shown due to high insulation characteristics. FIG. 6 is a graph illustrating the brightness of an electronic device housing to which a mirror ink pattern layer according to a comparative example is applied and the brightness of an electronic device housing to which a mirror ink pattern layer according to various embodiments of the disclosure is applied. FIG. 7 is a graph illustrating the reflection rate of an electronic device housing to which a mirror ink pattern layer according to a comparative example is applied and the reflection rate of an electronic device housing to which a mirror ink pattern layer according to various embodiments of the disclosure is applied. Comparative example A of FIGS. 6 and 7 relates to a mirror ink pattern layer including a continuously formed pattern manufactured by setting non-conductivity as a constraint and lowering the content of powder of the metal component. On the other hand, in FIGS. 6 and 7, embodiment B of the disclosure relates to a mirror ink pattern layer including a multi-layer lattice structure in which the content of powder of the metal component is increased.

Referring to FIG. 6, it may be identified that in comparative example A, the luminance value is about 77, and in embodiment B of the disclosure, the luminance value is about 86. As such, it may be identified that embodiment B of the disclosure may have high luminance characteristics as the content of the powder of the metal component is increased, as compared to comparative example A.

Referring to FIG. 7, in comparative example A, the reflection rate is about 49% to 52%, and in embodiment B of the disclosure, the reflection rate is about 65% to 69%. As such, in embodiment B of the disclosure, as the content of the powder of the metal component is increased compared to comparative example A, it may be identified that there is a remarkable difference in light reflection according to the content of the powder of the metal component.

FIG. 8 is a view illustrating a cross section of a mirror ink pattern layer according to an embodiment. FIG. 9 is a view illustrating a mirror ink pattern layer viewed from above according to an embodiment. FIGS. 8 and 9 may illustrate a mirror ink pattern layer according to an embodiment different from that of FIG. 4.

For example, as illustrated in FIG. 8, when the mirror ink pattern layer includes pattern elements of an island arrangement, the multi-layer pattern structure 600 of at least three layers may be applied. In this case, the multi-layer pattern structure 600 may include a first mirror ink layer 610, a second mirror ink layer 630, and a third mirror ink layer 550. Here, it should be noted that the powders of metal components included in the first mirror ink layer 610, the second mirror ink layer 630, and the third mirror ink layer 650 may be powders of metal components in which types or contents are set to be the same but, without limitations thereto, may be powders of metal components of different types or contents. It is also possible to use a powder of a metal component only for any one of the first mirror ink layer 610, the second mirror ink layer 630, and the third mirror ink layer 650.

The embodiment illustrated in FIGS. 8 and 9 may be, e.g., a three-layered multi-layer pattern structure in which the first mirror ink layer 610, the first transparent insulation ink layer 620, the second mirror ink layer 630 containing a powder of a metal component, the second transparent insulation ink layer 640, and the third mirror ink layer 650 containing a powder of a metal component are sequentially stacked. The first mirror ink layer 610 may include a plurality of first pattern elements 611 spaced apart from each other through a first gap g1. The second mirror ink layer 630 may include a plurality of second pattern elements 631 spaced apart from each other through a second gap g2 and formed at different positions from the plurality of first patterns 611. The third mirror ink layer 650 may be spaced apart from each other through a third gap g3 and may include a plurality of third pattern elements 651 formed at different positions from the plurality of first pattern elements 611 and the plurality of second pattern elements 631. In the embodiments of FIGS. 8 and 9, it is illustrated that the plurality of first pattern elements 611, the plurality of second pattern elements 631, and the plurality of third pattern elements 651 are spaced apart from each other in each mirror ink layer in the first direction and the second direction, but the disclosure is not necessarily limited thereto, and the plurality of first pattern elements 611, the plurality of second pattern elements 631, and the plurality of third pattern elements 651 may be spaced apart from each other in each mirror ink layer in a direction different from the first direction and the second direction.

In the embodiment illustrated in FIGS. 8 and 9, the plurality of first pattern elements 611, the plurality of second pattern elements 631, and the plurality of third pattern elements 651 may be formed as the same shape using the same ink, although they are somewhat different in size. As such, when the plurality of first patterns 611, the plurality of second patterns 631, and the plurality of third patterns 651 included in the first mirror ink layer 610, the second mirror ink layer 630, and the third mirror ink layer 650 all use the same ink and are formed as the same shape, the housing 310 may appear to have one metal texture when viewed from a long distance, and the patterns may be perceived only at a short distance less than or equal to a predetermined distance.

In the multi-layer pattern structure of FIG. 8, at least two mirror ink layers among a first mirror ink layer 610, a second mirror ink layer 630, and a third mirror ink layer 650 including patterns are stacked with each other. However, the multi-layer pattern structure of the disclosure may also have a structure in which at least some layers are not stacked, as well as a structure in which at least two layers among the layers including the pattern are stacked with each other. For example, the first mirror ink layer 610 and the second mirror ink layer 630 may be stacked on each other, but the first mirror ink layer 610 and the third mirror ink layer 650 may not be stacked on each other. Alternatively, the first mirror ink layer 610 and the third mirror ink layer 650 may be stacked on each other, and the first mirror ink layer 610 and the second mirror ink layer 630 may not be stacked on each other, or the second mirror ink layer 630 and the third mirror ink layer 650 may be stacked on each other, and the first mirror ink layer 610 may not be stacked on another mirror ink layer.

When the pattern includes the pattern elements of the island arrangement (the multi-layer pattern structure 500 of FIGS. 4 and 5, the multi-layer pattern structure 600 of FIGS. 8 and 9), if the mirror ink pattern layer is formed as the multi-layer pattern structure of two layers rather than a multi-layer pattern structure of at least three layers, the gap between the pattern elements may be exposed to the outside as it is. For example, when the mirror ink pattern layer including the pattern elements of the island arrangement is composed of the first mirror ink layer 510 or 610 and the second mirror ink layer 530 or 630, the first gap g1 between the plurality of first pattern elements 511 and 611 and the second gap g2 between the plurality of second pattern elements 531 and 631 are exposed to the outside as they are. In this case, the metal texture may not be sufficiently expressed in the housing (e.g., the housing 310 of FIGS. 2 and 3). Therefore, when the lattice-shaped pattern is formed of island-shaped pattern elements, it is preferable to apply a multi-layer pattern structure of at least three layers. According to an embodiment, in the first mirror ink layer 610, the second mirror ink layer 630, and the third mirror ink layer 650, the metal content forming each mirror ink layer may be set to differ. For example, the first mirror ink layer 610 may have a higher metal content, the second mirror ink layer 630 may have a relatively lower metal content than the first mirror ink layer 610, and the third mirror ink layer 650 may have a lower metal content than the first mirror ink layer 610 and the second mirror ink layer 630. Other various embodiments may be applied. As described above, by setting the metal content forming each mirror ink layer to differ, the reflectivity of each layer may be adjusted, thereby allowing the user to have more diverse aesthetic feelings when viewing the pattern.

FIG. 10 is a view illustrating a cross section of a mirror ink pattern layer according to an embodiment. FIG. 11 is a view illustrating a mirror ink pattern layer having a lattice-shaped pattern viewed from above according to an embodiment. FIGS. 10 and 11 may illustrate a mirror ink pattern layer according to an embodiment different from that of FIG. 4.

According to an embodiment, when the pattern elements are formed as an arrangement of lines, the pattern may be formed as the multi-layer pattern structure of at least two layers. According to an embodiment, the number of layers may correspond to the number of mirror ink layers.

For example, as illustrated in FIGS. 10 and 11, when a pattern is formed of pattern elements of a line arrangement, a two-layered multi-layer pattern structure 700 may be applied. In this case, the multi-layer pattern structure 700 may include a first mirror ink layer 710 containing a powder of a metal component and a second mirror ink layer 730 containing a powder of a metal component. Here, it should be noted that the powders of metal components included in the first mirror ink layer 710 and the second mirror ink layer 730 may be powders of metal components in which types or contents are set to be the same but, without limitations thereto, may be powders of metal components of different types or contents. Further, the first mirror ink layer 710 and the second mirror ink layer 730 may not be directly stacked on each other, but may be indirectly stacked through an insulation layer. For example, in the multi-layer pattern structure of two layers, as illustrated in FIG. 10, the first mirror ink layer 710, the first transparent insulation ink layer 720, and the second mirror ink layer 730 containing a powder of a metal component may be sequentially stacked.

Referring to FIGS. 10 and 11 together, the first mirror ink layer 710 may include a plurality of first pattern elements 711 spaced apart from each other through a first gap g1. The second mirror ink layer 730 may include a plurality of second pattern elements 731 spaced apart from each other through a second gap g2 and formed at different positions from the plurality of first patterns 711. Here, it should be noted that the plurality of first pattern elements 711 and the plurality of second pattern elements 731 may be patterns having the same size or shape but, without limitations thereto, may be patterns having different sizes and/or shapes.

Referring to FIGS. 10 and 11 together, the plurality of first pattern elements 711 and the plurality of second pattern elements 731 may be formed as a shape in which the plurality of first pattern elements 711 and the plurality of second pattern elements 731 are alternately disposed along a first direction (X-axis direction) or a second direction (Y-axis direction).

According to an embodiment of the disclosure, when the pattern elements have a line arrangement, as long as a two-layered multi-layer pattern structure is provided, the overall metal texture may be expressed without gaps.

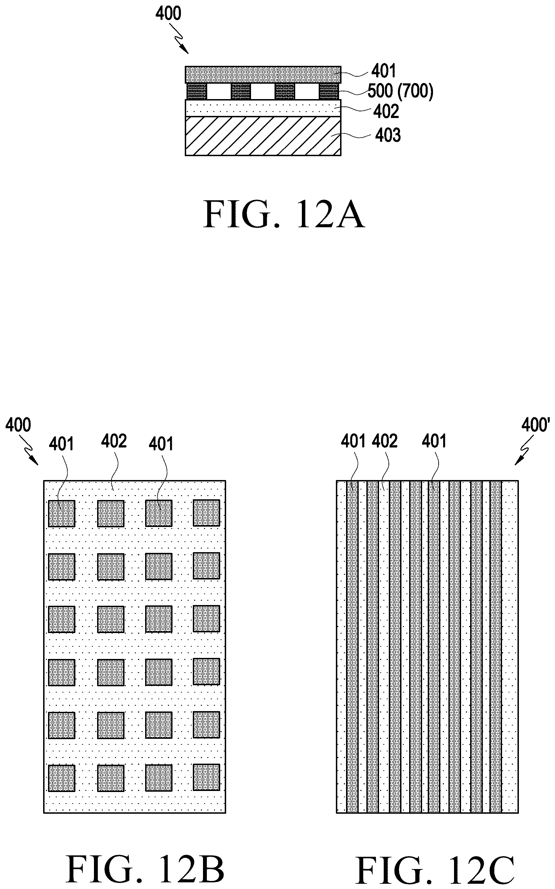

Hereinafter, FIGS. 12A to 13C disclose other various embodiments of designing a housing using a mirror ink printing method.

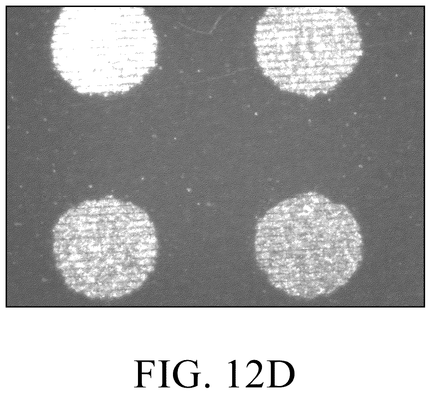

FIG. 12A is a view illustrating a cross section of an electronic device housing to which a mirror ink pattern layer is applied according to an embodiment. FIG. 12B is a view illustrating the housing of FIG. 12A viewed from above according to an embodiment. FIG. 12C is a view illustrating the housing of FIG. 12A viewed from above according to an embodiment different from that of FIG. 12B. FIG. 12D illustrates a measurement image of a product to which the housing of FIG. 12A is applied.

According to an embodiment, the housing 400 may further include an optical pattern layer 401, and the mirror ink pattern layer 500 or 700 may be formed on the rear surface of the optical pattern layer 401. Here, the optical pattern layer 401 is for enhancing the exterior design of the housing 400, and may be provided, e.g., by a molding method. The pattern of the optical pattern layer 401 may be implemented as shown in the measurement image of FIG. 12D. FIG. 12D illustrates a corrugated pattern, but is not necessarily limited thereto.

When the housing 400 has an island-arrangement pattern, the mirror ink pattern layer 500 may be printed in an island form as illustrated in FIG. 12B. When the housing 400 has a pattern of a line arrangement, the mirror ink pattern layer 700 may have a pattern elongated in one direction (e.g., the Y direction) as illustrated in FIG. 12C.

According to an embodiment, the housing 400 may further include a second mirror ink pattern layer 402 and a color shielding printed layer 403 as illustrated in FIG. 12A. The second mirror ink pattern layer 402 may be a conventional mirror ink pattern layer to which a pattern is not applied. The color shielding printed layer 403 is provided to prevent the inside (or internal components) of the electronic device surrounded by the housing 400 from being visible, and may be a portion including an opaque color.

According to an embodiment, the pattern design may be further diversified by additionally applying the second mirror ink pattern layer 402. When the second mirror ink pattern layer 402 is used together with the mirror ink pattern layer 500 of the disclosure, an additional depth feeling of the design may be achieved. For example, when the second mirror ink pattern layer 402 includes matte ink, the light reaching the second mirror ink pattern layer 402 is not reflected, and thus the optical pattern 401 may be visible only in the portions where the mirror ink pattern layers 500 and 700 are formed (see the measurement image of FIG. 12D).

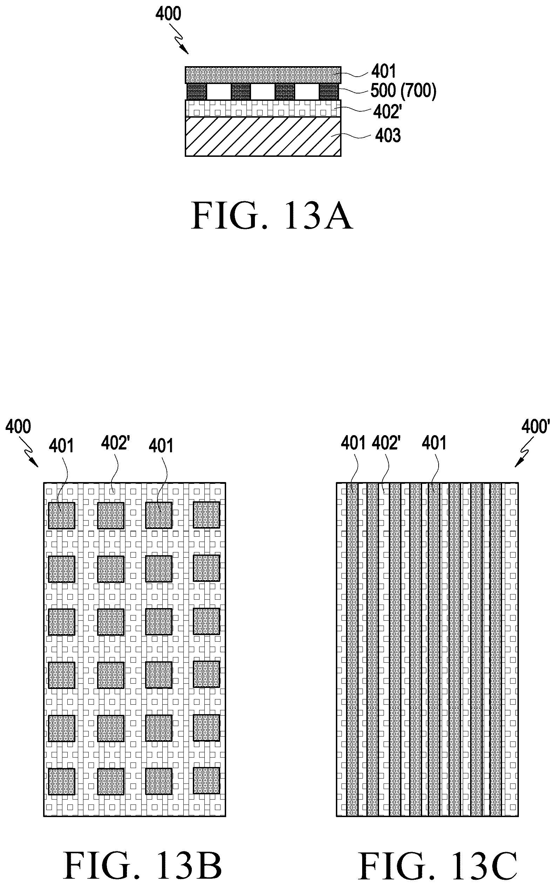

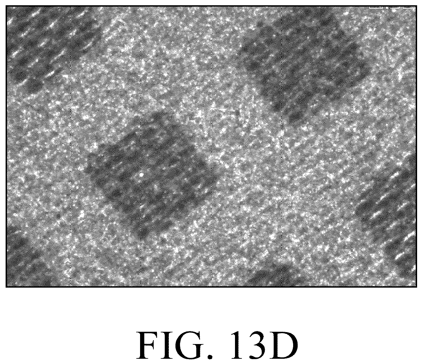

FIG. 13A is a view illustrating a cross section of an electronic device housing to which a mirror ink pattern layer having a pattern is applied according to an embodiment. FIG. 13B is a view illustrating the housing of FIG. 13A viewed from above according to an embodiment. FIG. 13C is a view illustrating the housing of FIG. 13A viewed from above according to an embodiment. FIG. 13D illustrates a measurement image of a product to which the housing of FIG. 13A is applied. FIG. 13A may illustrate a cross section of an electronic device housing to which a mirror ink pattern layer according to an embodiment different from that of FIG. 12A is applied, and FIG. 13C may illustrate a housing according to an embodiment different from that of FIG. 13B.

When the housing 400 has an island arrangement pattern, the mirror ink pattern layer 500 may be printed in an island arrangement as illustrated in FIG. 13B. When the housing 400 has a pattern of a line arrangement, the mirror ink pattern layer 700 may have a pattern elongated in one direction (e.g., the Y direction) as illustrated in FIG. 13C. In describing the embodiments of FIGS. 13A to 13D, the same content as that of FIGS. 12A to 12D is omitted for convenience.

According to an embodiment, as illustrated in FIG. 13A, the housing 400 may further include a second mirror ink pattern layer 402' and a color shielding printed layer 403. In the embodiments of FIGS. 13A to 13D, a low-content non-conductive mirror ink may be applied as the second mirror ink pattern layer 402'.

When the second mirror ink pattern layer 402' is used together with the mirror ink pattern layer 500 of the disclosure, the design may be configured in more various ways. For example, when the second mirror ink pattern layer 402' includes a low-content non-conductive mirror ink, in the portion where the second mirror ink pattern layer 402' is printed, the optical pattern 401 may look lighter and, in a portion on which the mirror ink pattern layer 500 or 700 is formed, the optical pattern 401 may look darker (e.g., see the measurement image of FIG. 13D).

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment of the disclosure, there may be provided an electronic device (e.g., the electronic device 101 of FIG. 1) comprising a housing (e.g., the housing 310 of FIGS. 2 and 3, the housing 400 or 400' of FIG. 12) including a front plate, a rear plate facing in an opposite direction from the front plate, and a side member surrounding a space between the front plate and the rear plate, and an antenna (e.g., the antenna module 197 of FIG. 1), wherein the housing includes a mirror ink pattern layer (e.g., the mirror ink pattern layer 500 of FIG. 4, the mirror ink pattern layer 600 of FIG. 8, or the mirror ink pattern layer 700 of FIG. 10) having at least a portion containing a powder of a metal component, and wherein adjacent pattern elements forming a pattern of the mirror ink pattern layer are insulated from each other.

According to an embodiment, the mirror ink pattern layer may be formed as a multi-layer pattern structure.

According to an embodiment, in the mirror ink pattern layer, each of the adjacent pattern elements forming the pattern may be formed as an island arrangement or a line arrangement.

According to an embodiment, when the mirror ink pattern layer is formed of island-arrangement pattern elements, the mirror ink pattern layer may be formed as a multi-layer pattern structure (e.g., the multi-layer pattern structure of FIG. 4) of at least three layers.

According to an embodiment, the multi-layer pattern structure of the at least three layers may include a first mirror ink layer (e.g., the first mirror ink layer 510 of FIG. 4) containing a powder of a metal component, a first transparent insulation ink layer (e.g., the first transparent insulation ink layer 520 of FIG. 4), a second mirror ink layer (e.g., the second mirror ink layer 530 of FIG. 4) containing a powder of a metal component, a second transparent insulation ink layer (e.g., the transparent insulation ink layer 540 of FIG. 4), and a third mirror ink layer (e.g., the third mirror ink layer 550 of FIG. 4) containing a powder of a metal component, which are sequentially stacked.

According to an embodiment, the first mirror ink layer may include a plurality of first pattern elements (e.g., the plurality of first pattern elements 511 of FIG. 5) spaced apart from each other, the second mirror ink layer may include a plurality of second pattern elements (e.g., the plurality of second pattern elements 531 of FIG. 5) spaced apart from each other and formed at different positions from the plurality of first pattern elements, and the third mirror ink layer may include a plurality of third pattern elements (e.g., the plurality of third pattern elements 551 of FIG. 5) spaced apart from each other and formed at different positions from the plurality of first pattern elements and the plurality of second pattern elements.

According to an embodiment, the plurality of second pattern elements may be positioned between the plurality of first pattern elements when the multi-layer pattern structure is viewed from thereabove, and the plurality of third pattern elements may be positioned between the plurality of first pattern elements and between the plurality of second pattern elements when the multi-layer pattern structure is viewed from thereabove.

According to an embodiment, when the mirror ink pattern layer is formed of line-arrangement pattern elements, the mirror ink pattern layer may be formed as a multi-layer pattern structure (e.g., the multi-layer pattern structure of FIG. 8) of at least two layers.

According to an embodiment, the multi-layer pattern structure of the at least two layers may include a first mirror ink layer (e.g., the multi-layer pattern structure 710 of FIG. 8) containing a powder of a metal component, a first transparent insulation ink layer (e.g., the multi-layer pattern structure 720 of FIG. 8), and a second mirror ink layer (e.g., the second mirror ink layer 730 of FIG. 8) containing a powder of a metal component, which are sequentially stacked.

According to an embodiment, the first mirror ink layer may include a plurality of first pattern elements (e.g., the plurality of first pattern elements 711 of FIG. 9) spaced apart from each other, and the second mirror ink layer may include a plurality of second pattern elements (e.g., the plurality of second pattern elements 731 of FIG. 9) spaced apart from each other and formed at different positions from the plurality of first pattern elements.

According to an embodiment, the plurality of second pattern elements may be positioned between the plurality of first pattern elements when the multi-layer pattern structure is viewed from thereabove.

According to an embodiment, the housing may further include an optical pattern layer, and the mirror ink pattern layer may be formed on a rear surface of the optical pattern layer.

According to an embodiment, the housing may further include a second mirror ink pattern layer.

According to an embodiment, the housing may further include a color shielding printed layer.

According to an embodiment, the antenna may include an antenna disposed in the housing and an antenna capable of communication with an outside using at least a portion of the housing.

According to an aspect of the disclosure, there may be provided an accessory cover of an electronic device detachable from a housing of the electronic device, a cover of the electronic device comprising a mirror ink pattern layer (e.g., the mirror ink pattern layer 500 of FIG. 4, the mirror ink pattern layer 600 of FIG. 8, or the mirror ink pattern layer 700 of FIG. 10) having at least a portion containing a powder of a metal component and formed so that adjacent pattern elements forming a pattern of the mirror ink pattern layer are insulated from each other.

While the present invention has been shown and described with reference to exemplary embodiments thereof, it will be apparent to those of ordinary skill in the art that various changes in form and detail may be made thereto without departing from the spirit and scope of the disclosure as defined by the following claims. It will be apparent to one of ordinary skill in the art that various changes may be made in form and detail without departing from the overall scope of the disclosure, including the appended claims and their equivalents. Although FIG. 12 illustrates the mirror ink pattern layer 500 of FIG. 4 and the mirror ink pattern layer 700 of FIG. 10 as examples of the mirror ink pattern layer, the disclosure is not limited thereto, and the mirror ink pattern layer 600 of FIG. 8 or mirror ink pattern layers according to other embodiments may also apply.

## Claims

1. An electronic device, comprising:
a housing including a front plate, a rear plate facing in an opposite direction from the front plate, and a side member surrounding a space between the front plate and the rear plate; and
an antenna,
wherein at least a portion of the housing includes a mirror ink pattern layer containing a powder of a metal component, and wherein in the mirror ink pattern layer, adjacent pattern elements forming a pattern of the mirror ink pattern layer are insulated from each other.

2. The electronic device of claim 1, wherein the mirror ink pattern layer includes a multi-layer pattern structure.

3. The electronic device of claim 2, wherein in the mirror ink pattern layer, each of the adjacent pattern elements forming the pattern is formed as an island shape or a line shape.

4. The electronic device of claim 3, wherein when the mirror ink pattern layer is formed of island-shaped pattern elements, the mirror ink pattern layer is formed as a multi-layer pattern structure including at least three layers.

5. The electronic device of claim 4, wherein the multi-layer pattern structure including at least three layers comprises:
a first mirror ink layer containing a powder of a metal component;
a first transparent insulation ink layer;
a second mirror ink layer containing a powder of a metal component;
a second transparent insulation ink layer; and
a third mirror ink layer containing a powder of a metal component, which are sequentially stacked.

6. The electronic device of claim 5, wherein the first mirror ink layer includes a plurality of first pattern elements spaced apart from each other,
wherein the second mirror ink layer includes a plurality of second pattern elements spaced apart from each other and formed at different positions from positions of the plurality of first pattern elements, and
wherein the third mirror ink layer includes a plurality of third pattern elements spaced apart from each other and formed at different positions from the positions of the plurality of first pattern elements and positions of the plurality of second pattern elements.

7. The electronic device of claim 6, wherein the plurality of second pattern elements are disposed between the plurality of first pattern elements when the multi-layer pattern structure is viewed from thereabove, and
wherein the plurality of third pattern elements are disposed between the plurality of first pattern elements and between the plurality of second pattern elements when the multi-layer pattern structure is viewed from thereabove.

8. The electronic device of claim 3, wherein when the mirror ink pattern layer is formed of line-shaped pattern elements, the mirror ink pattern layer is formed as a multi-layer pattern structure including at least two layers.

9. The electronic device of claim 8, wherein the multi-layer pattern structure including at least two layers includes:
a first mirror ink layer containing a powder of a metal component;
a first transparent insulation ink layer; and
a second mirror ink layer containing a powder of a metal component, which are sequentially stacked.

10. The electronic device of claim 9, wherein the first mirror ink layer includes a plurality of first pattern elements spaced apart from each other, and
wherein the second mirror ink layer includes a plurality of second pattern elements spaced apart from each other and formed at different positions from positions of the plurality of first pattern elements.

11. The electronic device of claim 10, wherein the plurality of second pattern elements are disposed between the plurality of first pattern elements when the multi-layer pattern structure is viewed from thereabove.

12. The electronic device of claim 1, wherein the housing further includes an optical pattern layer, and wherein the mirror ink pattern layer is formed on a rear surface of the optical pattern layer.

13. The electronic device of claim 1, wherein the housing further includes a second mirror ink pattern layer.

14. The electronic device of claim 1, wherein the housing further includes a color shielding printed layer.

15. The electronic device of claim 1, wherein the antenna includes an antenna disposed in the housing and an antenna capable of communication with an outside using at least a portion of the housing.
